Europäisches Patentamt

European Patent Office

Office européen des brevets

(11) Veröffentlichungsnummer: **0 193 939**
**A2**

(12) **EUROPÄISCHE PATENTANMELDUNG**

(21) Anmeldenummer: 86102886.8

(22) Anmeldetag: 05.03.86

(51) Int. Cl.⁴: **B01J 4/00** ,
//C07H21/00,C07K1/00,G01N33-
/48,G01N1/10

(30) Priorität: 07.03.85 DE 3508162

(43) Veröffentlichungstag der Anmeldung:
10.09.86 Patentblatt 86/37

(84) Benannte Vertragsstaaten:
AT BE CH DE FR GB IT LI LU NL SE

(71) Anmelder: Max-Planck-Gesellschaft zur Förderung
der Wissenschaften e.v.
Bunsenstrasse 10
D-3400 Göttingen(DE)

(72) Erfinder: Wittmann, Brigitte, Dr. Dipl.-Chem.
Meisenstrasse 17
D-1000 Berlin 33(DE)
Erfinder: Graffunder, Horst
Lützelsteiner Weg 52
D-1000 Berlin 33(DE)
Erfinder: Kohls, Heinz
Kronprinzessinnenweg 33
D-1000 Berlin(DE)

(74) Vertreter: Lederer, Franz, Dr.
Patent Attorneys Dr. Franz Lederer Van der Werth
& Riederer Lucile-Grahn-Strasse 22
D-8000 Munich 80(DE)

(54) Leitungssystem für Laboratoriumszwecke.

(57) Es wird ein Leitungssystem für Laboratoriumszwecke vorgeschlagen. Dieses umfaßt einen Leitungsblock mit einer Gemeinschaftsleitung und einer Mehrzahl von Anschlußleitungen, wobei die Gemeinschaftsleitung und die Anschlußleitungen an den jeweiligen Verbindungsstellen in einer Hauptseitenfläche des Leitungsblocks in gegenseitiger Nachbarschaft Öffnungen aufweisen und zusammengehörige Öffnungen einer Verbindungsstelle jeweils durch die eine Seite eines der Hauptseitenfläche anliegenden, mit Randabdichtung versehenen Membranfeldes überlagert sind, dessen andere Seite einer Membranandrück-und abhebesteuerung ausgesetzt ist. Dabei ist die Gemeinschaftsleitung auf mindestens einem Teil ihrer Länge von einer offenen Nut in der Hauptseitenfläche gebildet, welche durch eine über mehrere Membranfelder hinweg zusammenhängende Membran abgedeckt ist. Auf diese Weise wird das Totvolumen der Gemeinschaftsleitung verringert.

FIG. 2

Rank Xerox

Leitungssystem für Laboratoriumszwecke

Die Erfindung betrifft ein Leitungssystem für Laboratoriumszwecke, insbesondere zur Zuführung von flüssigen oder gasförmigen Substanzen zu einem Bearbeitungsgefäß nach dem Oberbegriff des Anspruchs 1.

Ein solches Leitungssystem ist aus der DE-AS 24 13 703 und der DE-OS 26 48 751 bekannt.

Bei dem bekannten Leitungssystem besitzt die Gemeinschaftsleitung einen zick-zack-förmigen Verlauf, wobei die jeweils gleichphasig gelegenen Scheitel des Zick-zack-Verlaufs die Hauptseitenfläche des Leitungsblocks anschneiden. Die Anschlußleitungen münden ebenfalls in die Hauptseitenfläche des Leitungsblocks in der Nachbarschaft der Schnittstellen zwischen den Scheiteln des Zick-zack-Verlaufs und der Hauptseitenfläche. Ein Membranfeld überdeckt jeweils eine solche Schnittstelle und mindestens eine zugehörige Mündungsöffnung einer Anschlußleitung. Zwischen aufeinanderfolgenden, gleichphasig gelegenen Zick-zack-Scheiteln verläuft die Gemeinschaftsleitung innerhalb des Leitungsblocks.

Das bekannte Leitungssystem hat sich in der Praxis gut bewährt, insbesondere in Proteinsequenatoren und Peptidsynthesegeräten.

Die Gemeinschaftsleitung wird bei dem bekannten Leitungssystem jedoch durch den Zick-zack-Verlauf verlängert, wodurch das Totvolumen des Leitungssystems relativ groß wird. Außerdem erfordert die Herstellung der zick-zack-förmigen Bohrung einen hohen Bearbeitungsaufwand, wobei nicht vermieden werden kann, insbesondere bei Serienfertigung, daß an den Scheiteln gelegentlich Sacklöcher entstehen, die insofern zu Fehlerquellen führen können, als sie - schwer bespülbar sind.

Der Erfindung liegt die Aufgabe zugrunde, ein Leitungssystem gattungsgemäßer Art dahingehend zu verbessern, daß die Vergrößerung des Totvolumens durch den zick-zack-förmigen Verlauf vermieden wird und die Herstellung zumindest der Gemeinschaftsleitung erleichtert wird.

Zur Lösung dieser Aufgabe wird erfindungsgemäß eine Ausbildung nach dem kennzeichnenden Teil des Anspruchs 1 vorgeschlagen.

Die offene Nut kann in der Hauptseitenfläche des Leitungsblocks einen geradlinigen Verlauf haben, so daß das Totvolumen minimiert wird auf dasjenige Maß, das durch die notwendige Zahl der Anschlußleitungen und deren notwendigen Abstand vorgegeben ist. Die Dosierstrecke ist gleichzeitig verkürzt. Die Bildung von Sacklöchern, insbesondere bei Serienfertigung ist eliminiert. Der zentrale Kanal gewährleistet schnelleres Auswaschen, beispielsweise von Reagenzresten mit Lösungsmitteln oder Inertgas. Dadurch werden geringere Mengen an Lösungsmittel benötigt, mit denen das Ventil nach der Reagenzdosierung freigespült wird. Außerdem kann bei Freiblasen mit Inertgas der Druck niedriger gehalten werden. Beides ist von Vorteil für den Abbau kleinster Mengen an Peptiden oder Proteinen in einem zugehörigen Sequenator. Die benötigten Substanzmengen können weiter verringert werden. Die Identifizierung der abgespaltenen Aminosäurederivate wird nicht durch Nebenprodukte oder Verunreinigungen gestört.

Die einfachere Herstellung läßt geringeren Ausschuß und damit geringere Herstellungskosten erwarten.

Die Maßnahme des Anspruchs 2 ist an sich aus der DE-OS 26 48 751 bekannt. Sie sorgt insbesondere für eine zuverlässige Trennung benachbarter Anschlußleitungen voneinander.

Die Maßnahme des Anspruchs 3 sorgt dafür, daß die Gemeinschaftsleitung auch im Bereich zwischen benachbarten Membranfeldern absolut zuverlässig leckdicht ist.

Bei geringen zu erwartenden Drücken wird eine Leckdichtheit der Gemeinschaftsleitung zwischen benachbarten Membranfeldern auch bei Ausbildung gemäß Anspruch 4 erreicht, wobei zu beachten ist, daß bei Vakuumanlegen an die Gemeinschaftsleitung deren Leckdichtheit durch das Ansaugen der Membran an die Hauptseitenfläche des Leitungsblocks in der Nähe der Gemeinschaftsleitung noch unterstützt wird.

Die Membranandrück- und -abhebesteuerung erfolgt, wie aus der DE-OS 26 48 751 bekannt, bevorzugt durch Fluidenüberdruck auf der leitungsblockfernen Seite der Membranfelder und/oder durch Unterdruck, wie in Anspruch 5 angegeben. Diese Art der Steuerung läßt sich auf einfache Weise mit den Maßnahmen des Anspruchs 6 realisieren.

Die Maßnahme des Anspruchs 7 schafft auf einfache Weise eine zuverlässig dichtende Dichtkante, wobei dafür gesorgt wird, daß die als Offennut ausgebildete Gemeinschaftsleitung nicht abgeblockt wird.

Die Gemeinschaftsleitung kann mit verschiedenen Profilen hergestellt werden, wobei sich U-Profil, V-Profil und Halbkreisprofil anbieten. Die Entscheidung wird im wesentlichen von der einfachsten Herstellbarkeit abhängen, wobei zur Zeit die Herstellung der V-Nut relativ am einfachsten erscheint.

Die Maßnahme des Anspruchs 8 schafft auf einfache Weise einen Verteilerraum für den Steuerdruck bzw. das Steuervakuum, ohne daß eine besondere Verteilerkammer aus dem Steuerblock herausgearbeitet werden muß. Der Abstand zwischen der Membran und der ihr zugekehrten Seitenfläche des Steuerblocks kann durch mehr oder weniger kräftiges, gegebenenfalls mittels eines Drehmomentschlüssels normierbares Anziehen des Steuerblocks gegen den Leitungsblock so eingestellt werden, daß der Hub der Membran einerseits ausreichend ist, andererseits nicht zu einer Überdehnung der Membran führt.

Die erfindungsgemäße Einrichtung ist insbesondere auch zur gasförmigen Dosierung von Basen und Säuren durch Sättigung von inertem Trägergas geeignet.

Erste Versuche haben gezeigt, daß der Untergrund an störenden Verunreinigungen beim Abbau von Peptiden noch weiter als bisher herabgesetzt werden konnte.

Ganz allgemein ist die erfindungsgemäße Einrichtung in Sequenatoren zur Proteinanalytik geeignet, ferner für Dosiervorgänge in Peptid- und Nukleotidsynthesegeräten, ferner in Analysatoren und in medizinischen Diagnostikgeräten, bei denen kleine Mengen an Flüssigkeiten und Gasen und chemisch inerter und schonender Form dosiert werden müssen.

Die beiliegenden Figuren erläutern die Erfindung anhand eines Ausführungsbeipiels. Es stellen dar:

Fig. 1 eine Seitenansicht eines Leitungsblocks bei einem erfindungsgemäßen Leitungssystem;

Fig. 2 eine Draufsicht auf die Hauptseitenfläche des Leitungsblocks und

Fig. 3 einen Schnitt nach Linie II-II durch den Leitungsblock als Teil eines Gesamtgeräts.

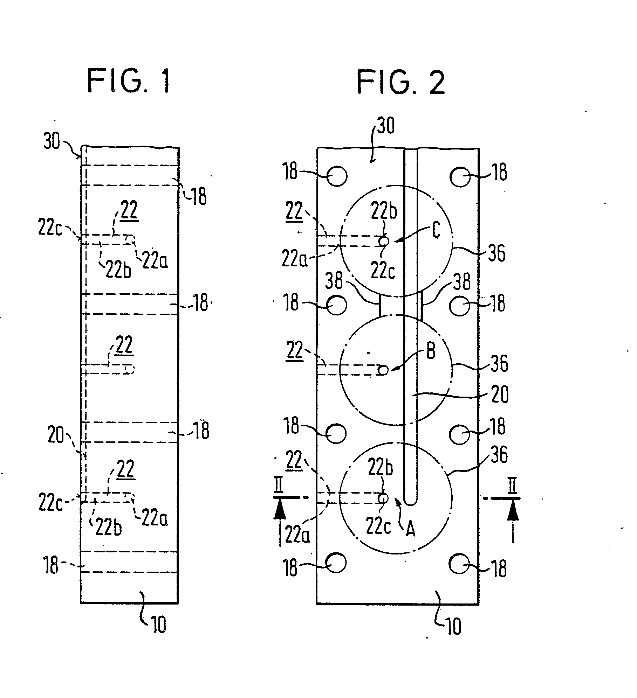

In den Figuren ist ein Leitungsblock ganz allgemein mit 10 bezeichnet. Dieser Leitungsblock ist zwischen einen Basisblock 12 und einen Steuerblock 14 durch Schraubbolzen 16 eingespannt, welche Bohrungen 18 des Leitungsblocks durchsetzen. Der Leitungsblock 10 weist eine Gemeinschaftsleitung 20 in Form einer V-förmigen oder keilförmigen Nut in seiner Hauptseitenfläche 30 auf. Diese Nut ist auf ihrer ganzen, in den Fig. 1 und 2 erkennbaren Länge offen. In dem Leitungsblock 10 sind ferner drei Anschlußleitungen 22 zu erkennen, die jeweils aus einem zur Hauptseitenfläche 30 parallelen Abschnitt 22a und einem zur Hauptseitenfläche 30 senkrechten Abschnitt 22b sowie einer Mündungsöffnung 22c in der Hauptseitenfläche 30 bestehen. Weitere Anschlüsse 22 können in Fig. 2 nach oben im Bereich des abgebrochenen Teils des Leitungsblocks sich anschließen. Die Mündungsöffnungen 22c bilden je eine Verbindungsstelle A, B bzw. C, an denen die Anschlußleitungen 22 mit der Gemeinschaftsleitung 20 zu verbinden sind.

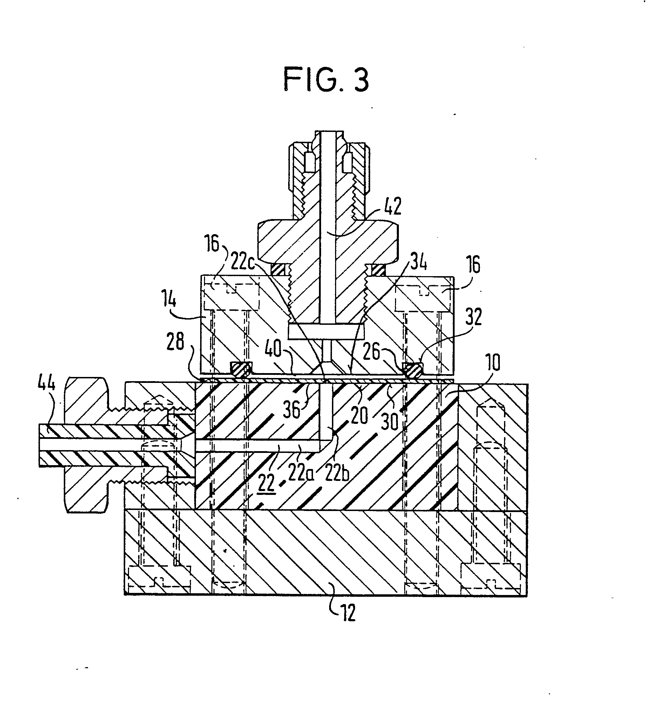

Wie aus Fig. 3 ersichtlich, liegt der Steuerblock 14 unter Vermittlung von Dichtungsringen 26 an einer Membran 28 an, die ihrerseits an der Hauptseitenfläche 30 des Leitungsblocks 10 anliegt. Die Dichtungsringe 26 sind von Ringnuten 32 aufgenommen, welche in der Seitenfläche 34 des Steuerblocks 14 ausgebildet sind, wobei jeder der Verbindungsstellen A bis C eine Ringnut 32 und ein Dichtungsring zugeordnet ist. Die Dichtungsringe 26 sind durch den Anzug der Schraubbolzen 16 teilweise komprimiert, jedoch so, daß zwischen der Seitenfläche 34 des Steuerblocks 14 und dem jeweiligen Membranfeld 36 innerhalb der Dichtungsringe 26 noch ein kleiner Abstand bestehen bleibt und die Membranfelder 36 sich von der Hauptseitenfläche 30 des Leitungsblocks 10 abheben können.

Die Gemeinschaftsleitung 20 ist durch die Membran 28 auf ihrer ganzen Länge abgedeckt. Zwischen benachbarten Dichtungsringen 32 sind die Abschnitte der Gemeinschaftsleitung 20 so kurz, daß auch dann, wenn die Membran 28 in diesen Abschnitten nicht gegen die Hauptseitenfläche 30 des Leitungsblocks 10 gedrückt ist, eine ausreichende Leckdichtung der Gemeinschaftsleitung gewährleistet ist. Es ist aber ohne weiteres möglich, wie in Fig. 2 angedeutet, zusätzliche Rippenabschnitte 38 oder Lineardichtungen vorzusehen, welche die Abstände zwischen benachbarten Dichtungsringen 26 überbrücken; in diesem Fall ist auch eine Leckdichtung der Gemeinschaftsleitung 20 in den außerhalb der Dichtungsringe 26 liegenden Abschnitten für den Fall höherer Leitungsdrücke gewährleistet.

Innerhalb der Dichtungsringe 32, über den Membranfeldern 36, sind Verteilerkammern 40 gebildet, die über Steueranschlüsse 42 wahlweise an Fluidendruck oder Vakuum angeschlossen werden können, so daß die jeweilige Anschlußleitung 22 wahlweise mit der Gemeinschaftsleitung 20 verbunden oder von dieser getrennt wird.

Die Anschlußleitungen 22 sind über Schlauchanschlüsse 44 mit Substanzgefäßen verbunden, deren Inhalt bei Bedarf der Gemeinschaftsleitung 20 zugeführt werden soll. An die in Fig. 2 unterste Anschlußleitung 22 kann ein Stickstoffvorrat oder ein Vorrat eines anderen inerten Gases angeschlossen sein, um die jeweils in die Gemeinschaftsleitung 20 eingebrachte Substanzdosis weitertransportieren zu können, beispielsweise in ein Bearbeitungsgefäß und um die Gemeinschaftsleitung 20 bei Bedarf reinigend durchspülen zu können.

**Ansprüche**

1. Leitungssystem für Laboratoriumszwecke, insbesondere zur Zuführung von flüssigen oder gasförmigen Substanzen zu einem Bearbeitungsgefäß, umfassen einen Leitungsblock (10) mit einer Gemeinschaftsleitung (20) und einer Mehrzahl von Anschlußleitungen (22), wobei die Gemeinschaftsleitung (20) und die Anschlußleitungen (22) an den jeweiligen Verbindungsstellen (A, B, C) in einer Hauptseitenfläche (30) des Leitungsblocks (10) in gegenseitiger Nachbarschaft Öffnungen aufweisen und zusammengehörige Öffnungen (22c, 20) einer Verbindungsstelle (A, B, C) jeweils durch die eine Seite eines der Hauptseitenfläche (30) anliegenden, mit Randabdichtung versehenen Membranfeldes (36) überlagert sind, dessen andere Seite einer Membranandrück-und -abhebesteuerung ausgesetzt ist, dadurch gekennzeichnet, daß die Gemeinschaftsleitung (20) auf mindestens einem Teil ihrer Länge von einer offenen Nut in der Hauptseitenfläche (30) gebildet ist, welche durch eine über mehrere Membranfelder (36) hinweg zusammenhängende Membran (28) abgedeckt ist.

2. Leitungssystem nach Anspruch 1, dadurch gekennzeichnet, daß die Randabdichtung der Membranfelder (36) jeweils durch eine Ringkante (26) eines Steuerblocks (14) bewirkt wird, welche die Membran (28) gegen die Hauptseitenfläche (30) des Leitungsblocks (10) andrückt.

3. Leitungssystem nach Anspruch 2, dadurch gekennzeichnet, daß die Membran (28) in Bereichen , die zwischen benachbarten Ringkanten (26) gelegen sind, durch zusätzliche Andrückmittel (38) beidseits des jeweiligen Kanalabschnitts gegen die Hauptseitenfläche (30) dichtend angedrückt ist.

4. Leitungssystem nach Anspruch 2, dadurch gekennzeichnet, daß die Ringkanten (26) benachbarter Membranfelder (36) einander derart angenähert sind, daß auf zusätzliche Andrückmittel zum Andrücken der Membran (28) beidseits des jeweiligen, zwischen den benachbarten Ringkanten (26) gelegenen Kanalabschnitts verzichtet werden kann.

5. Leitungssystem nach einem der Ansprüche 1 bis 4, dadurch gekennzeichnet, daß die andere Seite der Membranfelder (36) durch Fluidenüberdruck und/oder durch Gasinnendruck und/oder durch Unterdruck beaufschlagbar ist.

6. Leitungssystem nach Anspruch 5, dadurch gekennzeichnet, daß in dem Steuerblock (14) Steuerleitungen (42) vorgesehen sind, welche zu der jeweils anderen Seite der Membranfelder (36) jeweils innerhalb der Ringkante (26) führen.

7. Leitungssystem nach einem der Ansprüche 2 bis 6, dadurch gekennzeichnet, daß die Ringkante von einem in einer Ringnut (32) des Steuerblocks (14) teilweise aufgenommenen Dichtungsring (26) aus elastisch komprimierbarem Werkstoff gebildet ist, wobei die Kompressibilität und der Anpreßdruck derart aufeinander abgestimmt sind, daß seine Unterbrechung oder wesentliche Einschnürungen oder offenen Nut (20) an der Kreuzungsstelle mit dem Dichtungsring (26) vermieden ist.

8. Leitungssystem nach Anspruch 7, dadurch gekennzeichnet, daß der Steuerblock (14) unter Kompression des Dichtungsrings (26) so weit gegen die Membran (28) angenähert ist, daß noch ein kleiner Abstand (40) zwischen der Membran (28) und der ihr zugekehrten Fläche (34) des Steuerblocks (14) verbleibt.

# FIG. 1

# FIG. 2

# FIG. 3

GI 883
Max-Planck-Gesellschaft